Europäisches Patentamt

European Patent Office

Office européen des brevets

(11) Publication number: **0 415 730 A2**

# EUROPEAN PATENT APPLICATION

(21) Application number: **90309425.8**

(22) Date of filing: **29.08.90**

(51) Int. Cl.⁵: **B32B 27/00**, B32B 3/26, B29C 51/10

(30) Priority: **01.09.89 US 402274**

(43) Date of publication of application:
**06.03.91 Bulletin 91/10**

(84) Designated Contracting States:
**BE DE DK ES FR GB IT**

(71) Applicant: **W.R. Grace & Co.-Conn.**
**1114 Avenue of the Americas**
**New York New York 10036(US)**

(72) Inventor: **Mueller, Walter Berndt**
**280 Berta Burns Rd.**
**Inman, SC 29349(US)**

(74) Representative: **Barlow, Roy James et al**
**J.A. KEMP & CO. 14, South Square, Gray's Inn**
**London WC1R 5LX(GB)**

(54) **Shrinkable bubble laminate.**

(57) A shrinkable bubble laminate is characterized by a first formable film and a second, oriented shrinkable film. The use of a shrinkable film in connection with a bubble laminate provides the advantages of an air insulating material without the bulkiness of conventional air cushioning materials.

FIG. 1

EP 0 415 730 A2

## SHRINKABLE BUBBLE LAMINATE

### BACKGROUND OF THE INVENTION

It is well known that "bubble" films, laminates, and packaging, i.e. film or film combinations where air or another gas is entrapped at regular intervals between two or more sheets of film, are useful in certain packaging applications. These bubble constructions are sometimes referred to as air-cushioning materials. These constructions are particularly useful where shock absorbance, softness, or physical or thermal insulation is required.

Many patents have issued in this general technology.

U. S. Patent No. 4,248,822 (Schmidt) discloses a moisture-permeable embossed film in which material in the end surfaces of the protrusions is oriented due to stretching, and will later shrink if reheated above the deformation temperature.

U. S. Patent No. 3,817,803 (Horsky) discloses a method of making a cellular cushioning structure in which an oriented film is adhered to another oriented or unoriented ply with air trapped between the plies.

An article "Shrink Air Bag" discloses a bag made by bonding shrinkable opp film with air-bubbled shock-absorbing bags.

U. S. Patent No. 4,576,669 (Caputo) discloses an apparatus and method for producing air-cushioning material in which a first film is heated and thermoformed on a cooled roll with cavities formed therein, and a second film is heated on a heated roll and heat-sealed to the first film.

U. S. Patent No. 4,579,516 (Caputo) discloses a forming roller useful as the cooled roller for thermoforming a first film as described in U. S. Patent No. 4,576,669.

U. S. Patent No. 4,192,699 (Lewicki et al) discloses a method of making inflatable cellular assemblies of plastic material which incudes the use of multiple sheets of material.

U. S. Patent No. 4,415,398 (Ottaviano) discloses air cell cushioning dunnage formed from two sheets of flexible plastic material, one of the sheets having been embossed to define cells with entrapped air.

U. S. Patent No. 3,508,992 (Chavannes) discloses a method for making cellular material using multiply laminates with at least one of the laminates embossed prior to sealing the laminates together.

U. S. Patent No. 3,142,599 (Chavannes) discloses a method for making laminated cushioning material, and sealed elements in hemispherical form.

U. S. Patent No. 3,208,898 (Chavannes et al) discloses an embossed, laminated article having an embossed or molded plastic layer, a sealing layer, a plurality of cells, and a second sealing layer sealed to the top of the cells.

U. S. Patent No. 3,285,793 (Chavannes) discloses an embossed cushioning material made by joining two films of plastic together, one of the films being embossed in a hemispherical shape.

U. S. Patent No. 3,586,565 (Fielding) discloses a first sheet sealed to a second embossed sheet to form a plurality of hermetically sealed cells.

U. S. Patent No. 3,616,155 (Chavannes) discloses a cellular product formed of multiply laminates wherein at least one of the laminates is embossed and the other laminate seals the embossment. Each laminate has a plastic base and a gas-impervious coating.

Canadian Patent No. 1,191,437 (Ottaviano) discloses a cushioning dunnage material of a first single stratum film, embossed to form air cells therein, and a second film adhered to the first film.

Canadian Patent No. 1 186 204 (Ottaviano) discloses a cushioning dunnage material of a first multilayer film, embossed to form air cells therein, and a second film adhered to the first film.

Great Britain Patent No. 908,579 discloses a laminated multi-cellular sheet packaging material made by embossing a first web on an embossing drum, and adhering a second web to the first web.

U. S. Patent No. 4,181,548 (Weingarten) discloses a three-layer laminated plastic cushioning material having a flat central layer with sealed air pockets on both sides of the central layer.

One problem associated with the use of many of these air cushion machines and materials is the bulkiness of the final bubble package. This bulkiness can result in the requirement of increased storage space for bubble film before it is used or sold, increased shipping cost because of the greater volume of a given length of film, etc.

An object of the present invention is to provide an air cushion or bubble laminate which has the advantages of bubble materials of the prior art, but takes up less space in storage than the conventional bubble materials. This object is achieved in the present invention by combining a formable film with an oriented shrinkable film to produce a shrinkable bubble laminate.

### SUMMARY OF THE INVENTION

A shrinkable bubble laminate comprises a thermoformable film formed into bubbles on an embossing roller and an oriented, shrinkable film adhered to the thermoformable film at portions of the thermoformable film adjacent the bubbles.

A method of making a shrinkable bubble laminate comprises heating a thermoformable thermoplastic film, advancing the heated thermoformable film to an embossing roll, vacuumizing the heated thermoformable film to form bubbles in the film, and adhering an oriented, shrinkable film to the thermoformable film so that the air in the bubbles of the thermoformable film is trapped between the thermoformable film and the oriented, shrinkable film.

### BRIEF DESCRIPTION OF THE DRAWING

The invention may be further understood by reference to the sole figure drawing in which the process and apparatus for producing the inventive film is schematically illustrated.

### DESCRIPTION OF THE PREFERRED EMBODIMENT

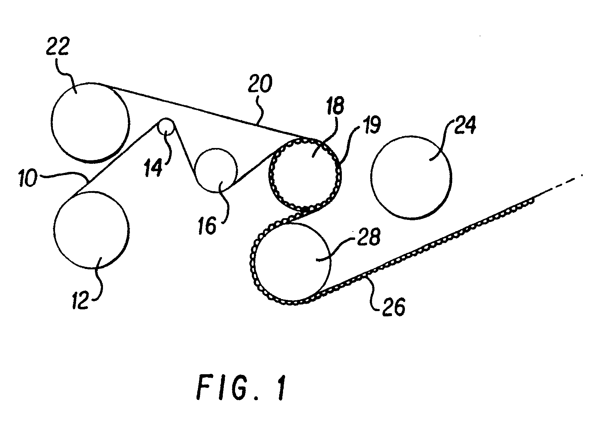

Referring to Figure 1, a thermoformable film 10 is advanced from roller 12 past a connecting roller 14 and a preheat roller 16 to a vacuum roller 18 which is equipped with hemispherically shaped cavities 19 for forming the bubbles of the final laminate. Equipment for this purpose is well known in the art, and disclosed for example in U. S. Patent Nos. 4,576,669 and 4,579,516.

A shrinkable, oriented film 20 is advanced from roller 22 and adhered to the thermoformable film 10 after the bubbles have been formed on the thermoformable film 10. A heated nip roll 24 is selectively pressed against shrinkable film 20 as it adheres to thermoformable film 10 in order to assist in the lamination process. The resulting shrinkable bubble laminate 26 is cooled on cooling roller 28 and can thereafter be further processed, or stored for further use. For example, a shrinkable bubble laminate produced at a laminate manufacturer's production facility may be stored on a roll and later distributed to a customer where the further steps of forming the laminate into a pouch or bag can be taken. Because a shrinkable oriented film is used in the production of the shrinkable laminate, a pouch or bag made from the laminate can be shrunk around a product by conventional heat shrinking means. In the event that the shrinkable laminate is produced at a customer's facility using appropriate equipment, the final shrinkable laminate 26 may be immediately advanced to a packaging station where the product to be packaged is introduced to the laminate either as is or converted into a pouch or bag.

The thermoformable films useful in the present invention may comprise a variety of monolayer and multilayer constructions. The only essential requirement of such a film is that it successfully withstand the bubble making step using appropriate equipment and adequately seal to the oriented, shrinkable film in such a way that a final shrinkable bubble laminate results. Preferred materials include those having a central layer of a polyamide such as nylon 6, adhered by means of intermediate adhesive layers to an outer abuse resistant layer and an inner sealant layer.

The intermediate adhesive layers are preferably chemically modified polymeric adhesives such as a chemically modified ethylene vinyl acetate copolymer containing carboxylic acid anhydride, available from Quantum/USI as Plexar 3®.

The outer abuse resistant layer is preferably a linear ethylene alpha-olefin copolymer, especially a linear low density polyethylene (LLDPE); or a propylene homopolymer or copolymer, especially ethylene propylene copolymer (EPC).

Examples of LLDPE resins which are commercially available are Dowlex 2035 available from Dow, having a density of about 0.920 grams/cc and a melt index of about 6 grams/10 minutes; and Dowlex 2045 having a similar density and also available from Dow. An example of the preferred EPC resin is Fina 8473 available from Fina.

The inner sealant layer of the thermoformable film is preferably a linear ethylene alpha olefin copolymer such as linear low density polyethylene (LLDPE) or very low density polyethylene (VLDPE). The inner sealant layer can also be an ethylene unsaturated ester copolymer, and more preferably an ethylene vinyl acetate copolymer (EVA) such as Exxon 32.89 (Exxon) and Elvax 3130 (du Pont). Additives such as antiblock agents may be added to either or both of the outer layers depending on the desired end use. Additional interme diate layers, located between the adhesive layers and one or both of the outer layers, may be included in the structure and may be an olefin polymer or copolymer such as LLDPE or EVA.

The oriented, shrinkable film may likewise be chosen from monolayer and multilayer constructions and preferably has a central layer of an olefin polymer or copolymer, or a polymeric material of low oxygen permeability. The outer layers are generally of a heat sealable olefin polymer or copolymer. Optionally, intermediate layers may be introduced in the construction of the oriented, shrinkable film 20.

The thermoformable film or oriented shrinkable film can also include appropriate amounts of electrically conductive or antistatic material as defined in U. S. Patent No. 4,848,566 (Havens et al) incorporated herein by reference. These electrically conductive and antistatic materials may be added to one or more layers of either the thermoformable film, the oriented, shrinkable film, or both.

The invention may be further understood by reference to the following example.

### EXAMPLE 1

A shrinkable bubble laminate was produced substantially according to the process described above, using machinery schematically depicted in Figure 1, and having a formable film to be described below and an oriented, shrinkable film having the construction EVA/LLDPE/EVA/LLDPE/EVA. This film was itself produced by a cast coextrusion method and crosslinked by irradiation. It was also stretch oriented to produce a shrinkable film.

A formable film had the following construction: 80% EPC + 20% Slip and antiblock additives/EVA (Elvax 3135 X)/Adhesive (Plexar 3)/Nylon 6 (Capron 8207F)/Adhesive (Plexar 3)/LLDPE (Dowlex 2045)-/80% EVA (Exxon 32.89) + 20% Antiblock Additive. The preheat roll 16 gas set at a temperature of 250° F, and the Dip roll 24 was set at a temperature of 375° F. Both film materials were run through the process as previously described and produced a shrinkable bubble laminate.

### EXAMPLE 2

A shrinkable bubble laminate like that of Example 1 is made, but having a oriented, shrinkable film having the construction LLDPE + LMDPE + EVA/Adhesive/EVOH + Polyamide/Adhesive/LLDPE + LMDPE + EVA.

Those skilled in the art will appreciate that various changes and modifications to the invention as specifically described herein are possible without departing from the scope of the claims which follow.

### EXAMPLE 3

A shrinkahle bubble laminate like that of Example 1 is made, but with an inner sealant layer of the thermformable film comprising a linear ethylene alpha olefin copolymer, and an intermediate adhesive layer disposed between the inner sealant film and the central layer, and comprising a chemically modified polymeric material which will adequately bond the inner sealant layer to the central layer.

### EXAMPLE 4

A shrinkable bubble laminate like that of Example 2 is made, but with the inner sealant layer of the thermoformable film, and the polymeric adhesive adjacent thereto, having the construction of Example 3.

## Claims

1. A shrinkable bubble laminate comprising:
   (a) a thermoformable film formed into bubbles on an embossing roller; and
   (b) an oriented, shrinkable film adhered to the thermoformable film at portions of the thermoformable film adjacent the bubbles.

2. The shrinkable bubble laminate of claim 1 wherein the thermoformable film is a multilayer film.

3. The shrinkable bubble laminate of claim 2 wherein the thermoformable film comprises a central layer of a polyamide, an outer abuse-resistant layer, an inner sealant layer, and intermediate adhesive layers.

4. The shrinkable bubble laminate of claim 3 wherein the central layer of the thermoformable film comprises nylon 6.

5. The shrinkable bubble laminate of claim 3 or 4, wherein the outer abuse-resistant layer of the thermoformable film comprises a polymeric material selected from the group consisting of linear ethylene alpha olefin copolymer and ethylene propylene copolymer.

6. The shrinkable bubble laminate of claim 3, 4 or 5, wherein the inner sealant layer of the thermoformable film comprises ethylene unsaturated ester copolymer; or ethylene vinyl acetate copolymer; or a linear ethylene alpha olefin copolymer, preferably a linear low density polyethylene.

7. The shrinkable bubble laminate of any one of the preceding claims, wherein the oriented, shrinkable film is a multilayer film.

8. The shrinkable bubble laminate of claim 7, wherein the oriented shrinkable film comprises:- a central layer of an olefin polymer or copolymer, preferably of low oxygen permeability, and outer layers of a heat sealable olefin polymer or copolymer.

9. The shrinkable bubble laminate of any one of the preceding claims, wherein the thermoformable film is cross-linked, preferably by irradiation.

10. A method of making a shrinkable bubble laminate comprising:

(a) heating a thermoformable, thermoplastic film;

(b) advancing the heated thermoformable film to an embossing roll;

(c) vacuumizing the heated thermoformable film to form bubbles in the film; and

(d) adhering an oriented, shrinkable film to the thermoformable film so that the air in the bubbles of the thermoformable film is trapped between the thermoformable and oriented, shrinkable films.

11. The method of claim 9 further comprising heating the shrinkable bubble laminate to a temperature above the orientation temperature of the oriented, shrinkable film to shrink the bubble laminate.

FIG. 1